# EUROPÄISCHE PATENTSCHRIFT

(11) **EP 1 621 283 B1**
(45) Veröffentlichungstag und Bekanntmachung des Hinweises auf die Patenterteilung: **29.08.2007**
(21) Anmeldenummer: 04016159.8
(22) Anmeldetag: 09.07.2004
(51) Int. Cl.: B23Q 3/10, F16B 7/18, F16B 37/04

(54) **System zum Aufbau von Vorrichtungen zum Aufspannen von Werkstücken**
System for the construction of devices for clamping workpieces
Système pour la réalisation de dispositifs de fixation de pièces

(43) Veröffentlichungstag der Anmeldung: 01.02.2006
(73) Patentinhaber: Horst Witte Entwicklungs- und Vertriebs KG, 21369 Nahrendorf (DE)
(72) Erfinder: Witte, Horst, 21369 Nahrendorf (DE)
(74) Vertreter: Fleck, Thomas

(56) Entgegenhaltungen:
- EP-A- 0 222 147
- EP-A- 1 103 733
- DE-A- 4 139 272
- DE-A- 10 036 478
- DE-U- 20 012 600
- US-A- 6 059 322

## Beschreibung

Die Erfindung betrifft ein System zum Aufbau von Vorrichtungen nach dem Oberbegriff des Anspruches 1.

Es sind T-Nutenprofile oder Aufspannplatten mit T-Nuten in den unterschiedlichsten Ausgestaltungen bekannt. Die Erfindung ist auf die Verwendung derartiger T-Nutenprofile oder -Platten gerichtet. Die T-Nuten weisen einen in Längsrichtung verlaufenden schmalen Einsteckschlitz und einen breiteren Nutengrund auf. Ihre Form kann unterschiedlich sein und mehr oder weniger gerade oder abgeschrägte Kanten aufweisen. Die Nutensteine, die als Befestigungselemente für Werkzeuge, Werkstücke oder dgl. dienen, sind der Nutenform angepasst. Sie können je nach Gestalt seitlich und von oben in die T-Nuten eingeführt und in diesen in Längsrichtung beliebig verschoben werden. Befestigt werden Sie durch Eindrehen einer Befestigungsschraube in ein mittleres Gewinde, wobei der rhombenförmige Abschnitt des Nutensteines an der entsprechenden Kante der T-Nut nach Drehung um ca. 45° zur Anlage gelangt und formschlüssig gehalten wird. Eine Positionierung oder Fixierung der Nutensteine in einem vorgegebenen Maß ist bei diesen bekannten T-Nutenprofilen nicht möglich. Das Fleisch, das zur Aufnahme der Befestigungsschraube um das Gewinde in den Nutenstein zur Verfügung steht, ist begrenzt durch die Breite des Schlitzes der T-Nut, durch den der Nutenstein eingesteckt werden muss.

Aus der EP 222 147 B1 ist ein System zum Aufbau von Vorrichtungen zum Aufspannen von Werkstücken auf Werkzeugmaschinentischen in definierter und reproduzierbarer Lage bekannt, bei dem Passbohrungen in besonders gestalteten Aufnahmeteilen vorgesehen sind, in denen Passschrauben mit Mutterteilen befestigt werden und die in einem bestimmten Rastermaß zueinander angeordnet sind, um für einen reproduzierbaren und vorgegebenen Aufbau von Vorrichtungen zu sorgen. Bei diesem bekannten System ist die Orientierung des Befestigungselementes in allen drei Achsrichtungen vorgegeben.

Der Erfindung liegt nun die Aufgabe zugrunde, ein System der eingangs genannten Art zu schaffen, bei dem die Vorteile der beiden Systeme miteinander kombinierbar sind.

Diese Aufgabe wird grundsätzlich durch den Anspruch 1 gelöst, wobei in besonders vorteilhafter Weise die Dimensionierung und Beabstandung so erfolgt, wie in einem der Ansprüche 2 bis 8 angegeben.

Erfindungsgemäß wird ein herkömmliches T-Nutenprofil oder eine entsprechende mit parallelen T-Nuten ausgerüstete Platte verwendet. In die T-Nuten dieses T-Nutenprofils werden die Bohrungen gebohrt oder gefräst, die der Anordnung und Aufnahme der besonders gestalteten Nutensteine dienen. Hierdurch ist es möglich, die Nutensteine in einem besonderen Rastermaß anzuordnen, d.h. sie sind in Längsrichtung der T-Nuten nicht verschiebbar, sondern in ihrer Position durch den Abstand der Bohrungen festgelegt. Der zylindrische Abschnitt liegt nach dem Einführen des Nutensteins in der entsprechend dimensionierten Bohrung, die, wenn sie wie in Anspruch 2 angegeben, mit einem entsprechenden Passsitz ausgebildet sind, ein genaues Rastermaß (Anspruch 3) einhalten. Dieses Rastermaß findet sich in vorteilhafter Weise auch bei den Ausbildungen nach Ansprüchen 4 bis 7 wieder. Die zylindrischen Abschnitte dienen nicht nur der passgenauen und reproduzierbaren Anordnung und Fixierung, sondern sie weisen auch gleichzeitig mehr Fleisch um die zugehörige Gewindebohrung zur Aufnahme einer entsprechenden Befestigungsschraube oder eines anderen Befestigungselementes auf. Hierdurch wird die Belastbarkeit erhöht.

Es ist aber nach wie vor möglich, in den T-Nuten herkömmliche bekannte Nutensteine anzuordnen, die in Längsrichtung der T-Nut verschiebbar sind, bevor sie in üblicher Weise an einer beliebigen Stelle befestigt werden. Das System nach der Erfindung lässt sich also mit einem herkömmlichen System aus T-Nutenprofilen oder -Platten und bekannten Nutensteinen kombinieren.

In vorteilhafter Weise kann das System so ausgebildet werden, wie in Anspruch 8 angegeben. Der zylindrische Abschnitt, der dann nicht nur in der Bohrung liegt, in den er vorteilhafter Weise mit einem Passsitz sitzt, kann in seinem vorstehenden Abschnitt dazu verwendet werden, um ein besonderes Befestigungselement (beispielsweise eine Mutter auf einem Außengewinde) aufzunehmen oder aber der Befestigung weiterer Werkstücke oder Werkzeuge dienen.

In vorteilhafter Weise ist das System aus Aluminium bzw. aus einer hochwertigen Aluminiumlegierung hergestellt.

Im folgenden wird die Erfindung unter Hinweis auf die Zeichnung anhand verschiedener Ausführungsbeispiele näher erläutert.

Es zeigt:
- Fig. 1: eine Draufsicht auf ein T-Nutenprofil zur Aufnahme von entsprechend rhombenförmigen oder ähnlich gestalteten Nutensteinen;
- Fig. 2: eine teilweise geschnittene Seitenansicht des T-Nutenprofils der Fig. 1;
- Fig. 3: zwei Ansichten einer Ausführungsform eines T-Nutensteins für das System nach der Erfindung;
- Fig. 4: zwei Ansichten einer anderen Ausführungsform eines T-Nutensteins für das System nach der Erfindung;
- Fig. 5: zwei Ansichten einer besonderen Ausführungsform eines T-Nutensteins, der sich in Verbindung mit den T-Nutenprofil nach Fig. 1 generell verwenden lässt; und
- Fig. 6: zwei Ansichten einer besonderen Ausführungsform eines rhombenförmigen T-Nutensteins der sich ebenfalls generell in Verbindung mit dem T-Nutenprofil nach Fig. 1 einsetzen lässt.

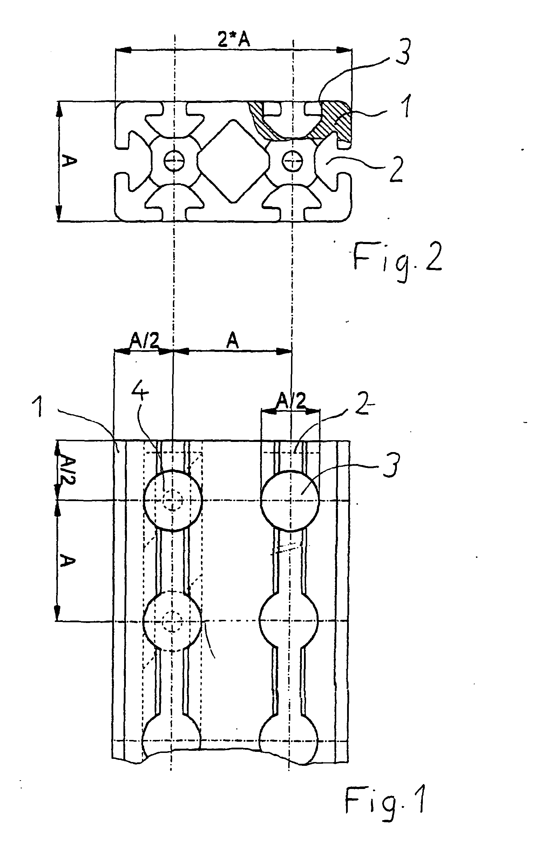

In den Figuren 1 und 2 ist ein T-Nutenprofil dargestellt, das auch entsprechend breiter als Platte oder dgl. ausgebildet sein kann. Dieses T-Nutenprofil 1 weist eine Reihe von T-Nuten 2 auf, die einen breiten T-Nutengrund mit abgeschrägten Seitenflächen und einen schmaleren mittleren Schlitz haben.

In die T-Nuten 2 sind Bohrungen 3 gebohrt oder gefräst, die mindestens bis auf den Boden des Nutengrundes verlaufen. Diese Bohrungen weisen bei dieser Ausführungsform einen Abstand A auf, der ein vorgegebenes Rastermaß darstellt. Der Durchmesser der Bohrungen beträgt A/2. Die T-Nuten selbst sind mit ihren Längsachsen in dem Rastermaß A voneinander beabstandet und sie weisen zu den Außenkanten und zu den Stirnkanten einen Abstand von einem halben Rastermaß, d.h. von A/2 auf. Wenn das Nutenprofil 1 so dimensioniert ist wie in Fig. 2 angegeben, beträgt die Höhe wiederum ein Rastermaß A und die Breite das doppelte Rastermaß 2A. Es ist verständlich, dass die Anordnung von mehreren T-Nuten unter Einhaltung dieses Rastermaßes A entsprechend möglich ist, so dass auch andere Gebilde wie Platten oder dgl. entstehen.

In Fig. 1 sind zwei Nutensteine 4 strichpunktiert in der einen T-Nut angeordnet angedeutet.

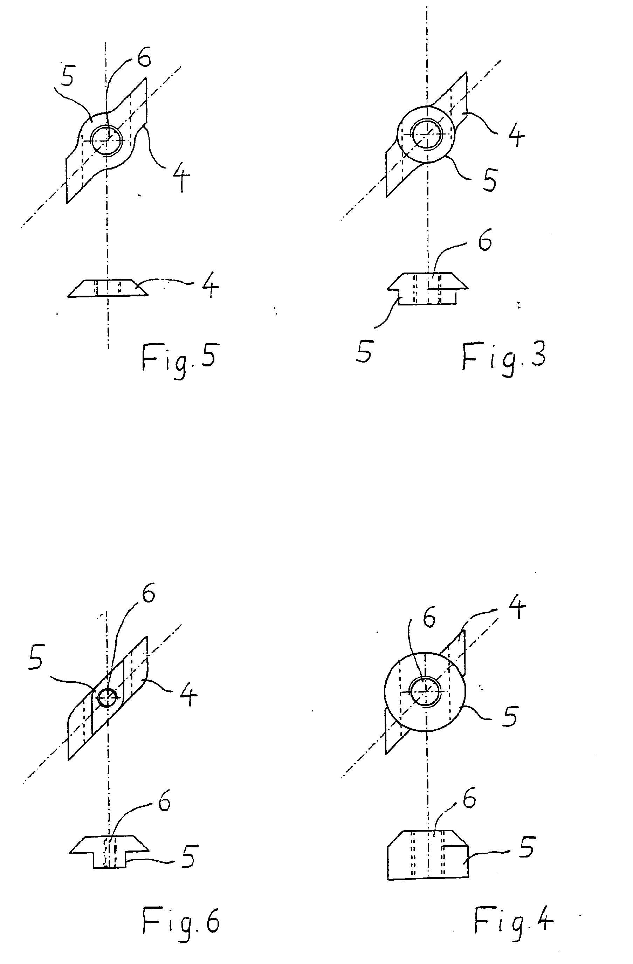

In den Figuren 3 und 4 sind zwei Nutensteine zum Aufbau eines Systems nach der Erfindung dargestellt.

Der Nutenstein 4 nach Fig. 3 weist einen zylindrischen Abschnitt 5 in der Mitte auf, der nach oben vorsteht und in die Bohrung 3 passt und zwar vorzugsweise mit einem Passsitz. Normalerweise befindet sich in dem zylindrischen Abschnitt eine Gewindebohrung zum Einschrauben der Befestigungsschraube.

Der Nutenstein nach Fig. 4 unterscheidet sich dadurch von demjenigen nach Fig. 3, dass der zylindrische Abschnitt "länger" ist, d.h. er steht über die Oberfläche des Nutenprofils 1 vor.

Die beiden Nutensteine 4 werden mit dem rhombenförmigen Abschnitt entsprechend in Längsrichtung der T-Nut 2 ausgerichtet im Bereich einer Bohrung 3 von oben in das T-Nutenprofil eingesteckt. Nach Drehung um ca. 45° nimmt der Nutenstein seine endgültige Position ein. Der quer verlaufende rhombenförmige Abschnitt kann durch eine Befestigungsschraube oder ein anderes Befestigungselement nach oben gezogen werden, um seine endgültig Stellung einzunehmen. Der zylindrische Abschnitt 5 ist genau in der ausgewählten Bohrung 5 fixiert und eine Verschiebung in Längsrichtung ist nicht möglich. Das vorgegebene Rastermaß A wird genau eingehalten. Eine Verschiebung in Längsrichtung der T-Nut ist nicht möglich.

Bei der Ausführungsform bei Fig. 4 dient der herausragende zylindrische Abschnitt der Befestigung weiterer Werkstücke oder Werkzeuge, beispielsweise kann auch ein Außengewinde vorgesehen sein.

Bei den Ausführungsformen des Nutensteines nach den Figuren 5 und 6 handelt es sich um solche, die durch die Bohrung 3 eingeführt werden können, aber auch in Längsrichtung verschiebbar sind. Diese sind mehr oder weniger in herkömmlicher Weise einsetzbar. Diese Ausführungsform hat den Vorteil, dass der zylindrische Abschnitt 5 stärker ist, da dieser Nutenstein von oben in die T-förmige Nute des T-Nutenprofils eingesteckt werden kann, da die Bohrung 3 einen entsprechenden Raum zur Verfügung stellt. Der zylindrische Abschnitt 5 ist stärker, so dass mehr Fleisch um die Bohrung 6 herum zur Verfügung steht. Hierdurch wird die Festigkeit erhöht.

Entsprechendes gilt grundsätzlich für den schmalen Abschnitt 5 bei der Ausführungsform nach Fig. 6. Dieser herkömmliche Nutenstein nach Fig. 6 ist ebenfalls universell in Verbindung mit dem T-Nutenprofil nach den Figuren 1 und 2 und entsprechend gestalteten T-Nutenprofilen oder -Platten einsetzbar.

Die Erfindung schafft ein System, das aus einem herkömmlichen T-Nutenprofil oder einer entsprechenden Platte gebildet wird. Durch die Anordnung von zusätzlichen Bohrungen in dem T-Nutenprofil, vorzugsweise in einem vorgegebenen Rastermaß können besonders ausgebildete - aber auch herkömmliche - Nutensteine verwendet werden, die zwangsläufig in dem vorgegebenen Rastermaß fixiert werden, da sie nicht in Längsrichtung der T-Nuten verschiebbar sind, sondern vorzugsweise mit einem genauen Passsitz in der Bohrung liegen.

## Patentansprüche

1. System zum Aufbau von Vorrichtungen zum Aufspannen von Werkstücken mit einem T-Nutenprofil, in deren T-Nuten rhombenförmige Nutensteine als Befestigungselemente einführbar sind, **dadurch gekennzeichnet, dass** in dem Nutenprofil (1) auf der Längsachse der T-Nuten (2) senkrechte Bohrungen (3) vorgesehen sind, deren Durchmesser im wesentlichen der Breite des T-Nutengrundes entspricht, und dass die Nutensteine (4) senkrecht zu ihrem rhombenförmigen Abschnitt um ihre Mittelachse einen zylindrischen Abschnitt 5 aufweisen, der in die Bohrungen (3) in den T-Nuten (2) passt.

2. System nach Anspruch 1, **dadurch gekennzeichnet, dass** die zylindrischen Abschnitte (5) mit einem Passsitz in die als Passbohrungen ausgebildeten Bohrungen (3) passen.

3. System nach Anspruch 1 oder 2, **dadurch gekennzeichnet, dass** die Bohrungen (3) in einem bestimmten Rastermaß A zueinander in Längsrichtung der T-Nut (2) angeordnet sind.

4. System nach Anspruch 3, **dadurch gekennzeichnet, dass** der Durchmesser der Bohrungen (3) und der zylindrische Abschnitt (5) der Nutensteine (4) dem halben Rastermaß A/2 entspricht.

5. System nach Anspruch 3 oder 4, **dadurch gekennzeichnet, dass** die T-Nuten (2) untereinander in einem Abstand des Rastermaßes oder einem Teil oder einem Vielfachen hiervon beabstandet sind.

6. System nach Anspruch 5, **dadurch gekennzeichnet, dass** die Längsachse der T-Nut (2) von der angrenzenden Längskante des T-Nutenprofils (1) in einem halben Rastermaß A/2 beabstandet ist.

7. System nach Anspruch 5 oder 6, **dadurch gekennzeichnet, dass** die Mittelachsen der Bohrungen (3) zu den angrenzenden Längs- und/oder Querkanten des T-Nutenprofils (1) in einem halben Rastermaß beabstandet sind.

8. System nach einem der Ansprüche, **dadurch gekennzeichnet, dass** die zylindrische Abschnitte (5) der Nutensteine (3) über die Oberfläche des T-Nutenprofils (1) hinausragen (Fig. 4).

## Claims

1. System for the construction of devices for fixing workpieces with a T-slot profile, into whose T-slots rhombic sliding blocks can be introduced as securing elements, **characterized in that** on the longitudinal axis of the T-slots (2) vertical holes are provided in the slot profile (1) and the hole diameter substantially corresponds to the T-slot bottom width, and that, perpendicular to the rhombic portion about the centre axis thereof, the sliding blocks have a cylindrical portion (5) fitting into the holes (3) in the T-slots (2).

2. System according to claim 1, **characterized in that** the cylindrical portions (5) fit with a press fit into holes (3) constructed as locating holes.

3. System according to claim 1 or 2, **characterized in that** the holes (3) are arranged in a specific pitch A to one another in the longitudinal direction of T-slot (2).

4. System according to claim 3, **characterized in that** the diameter of the holes (3) and the cylindrical portion (5) of sliding blocks (4) corresponds to half the pitch A/2.

5. System according to claim 4 or 4, **characterized in that** the T-slots (2) are spaced from one another by the pitch or by a part or a multiple thereof.

6. System according to claim 5, **characterized in that** the longitudinal axis of T-slot (2) is spaced by a half pitch A/2 from the adjacent longitudinal edge of T-slot profile (1).

7. System according to claim 5 or 6, **characterized in that** the centre axes of the holes (3) are spaced by a half pitch from the adjacent longitudinal and/or transverse edges of T-slot profile (1).

8. System according to one of the claims, **characterized in that** the cylindrical portions (5) of the sliding blocks (4) project beyond the surface of the T-slot profile (1) (fig. 4).

## Revendications

1. Système destiné à monter des dispositifs pour la fixation de pièces avec un profil de rainure en T, dans les rainures en T desquelles peuvent être introduits des coulisseaux en forme de losange comme éléments de fixation, **caractérisé en ce que** dans le profil de rainure (1) sur l'axe longitudinal des rainures en T (2) sont prévus des alésages (3) verticaux, dont le diamètre correspond sensiblement à la largeur du fond de rainure en T, et **en ce que** les coulisseaux (4) présentent perpendiculairement à leur partie en forme de losange autour de leur axe central une partie 5 cylindrique, qui s'adapte dans les alésages (3) dans les rainures en T (2).

2. Système selon la revendication 1, **caractérisé en ce que** les parties (5) cylindriques rentrent avec un siège ajusté dans les alésages (3) conçus comme alésages ajustés.

3. Système selon la revendication 1 ou 2, **caractérisé en ce que** les alésages (3) sont disposés à une cote de trame A définie, les uns par rapport aux autres, dans le sens longitudinal de la rainure en T (2).

4. Système selon la revendication 3, **caractérisé en ce que** le diamètre des alésages (3) et des parties (5) cylindriques des coulisseaux (4) correspond à la demi-cote de trame A/2.

5. Système selon la revendication 3 ou 4, **caractérisé en ce que** les rainures en T (2) sont espacées entre elles à une distance de la cote de trame ou à une partie ou un multiple de cette cote.

6. Système selon la revendication 5, **caractérisé en ce que** l'axe longitudinal de la rainure en T (2) est espacé de l'arête longitudinale contiguë du profil de rainure en T (1) à une demi-cote de trame A/2.

7. Système selon la revendication 5 ou 6, **caractérisé en ce que** les axes centraux des alésages (3) sont espacés à une demi-cote de trame des arêtes longitudinales et/ou transversales contiguës du profil de rainure en T (1).

8. Système selon l'une quelconque des revendications, **caractérisé en ce que** les parties (5) cylindriques des coulisseaux (3) dépassent de la surface du profil de rainure en T (1) (figure 4).
